(19)

Europäisches
Patentamt
European
Patent Office
Office européen
des brevets

(11) **EP 2 674 946 A1**

(12) **EUROPEAN PATENT APPLICATION**

(43) Date of publication:
**18.12.2013 Bulletin 2013/51**

(51) Int Cl.:
***G11B 27/031*** (2006.01)     ***G06F 17/30*** (2006.01)
***H04N 1/387*** (2006.01)

(21) Application number: **13161869.6**

(22) Date of filing: **29.03.2013**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | • **Kotwal, Mayank**<br>**560093 Bangalore (IN)**<br><br>(74) Representative: **Nederlandsch Octrooibureau**<br>**P.O. Box 29720**<br>**2502 LS The Hague (NL)** |
| (30) Priority: **03.04.2012   IN CH13522012 P**<br>**14.03.2013   IN CH13522012**<br>**26.03.2013   KR 20130032028** | Remarks:<br>A request for correction of the description has been filed pursuant to Rule 139 EPC. A decision on the request will be taken during the proceedings before the Examining Division (Guidelines for Examination in the EPO, A-V, 3.). |
| (71) Applicant: **Samsung Electronics Co., Ltd**<br>**Gyeonggi-do 443-742 (KR)** | |
| (72) Inventors:<br>• **Jain, Gaurav Kumar**<br>**560093 Bangalore (IN)** | |

(54) **Method and apparatus for updating at least one tag of multimedia content**

(57)     A method for updating tags in original content after editing the content is disclosed. The method reapplies tags presented in original image to the edited image in proper position and place. In case of any transform effects or distortion effects, the method calculates a new second position of tags. In case of image combination effects, the method adds tags from one or more images and recalculates the new position of tags based on the combination chosen. The method thus ensures that the tags from the original images are updated without being lost, an d updates the tags as per editing operations performed on the content and reapplies on the edited content as per the format supported by hosting platform.

FIG.1

EP 2 674 946 A1

**Description**

FIELD OF INVENTION

The present invention relates to multimedia content tagging and more particularly to updating tags after editing the multimedia content based on editing operations.

BACKGROUND OF INVENTION

With the advancement of communication technology, Internet service providers offer a variety of web-services that allow users to upload a variety of multimedia content, which may include images, audio, video and so on.
The content may be further shared with other users based on user's preference. Before sharing the content, the user may be interested in editing the content. For example, a user can combine several images into a single image, cutting off a part of the images, applying editing effects, and transform effects such as rotating, resizing, flipping and so on, then share it with other users using these web services. The edited content, however, does not contain all the original information. In particular, tagged information and the like may be lost.
A tag in a multimedia content refers to any additional information added to the multimedia content. A tag may be associated with a position in the multimedia content. This can be a spatial position (for example expressed in two or three dimensional coordinates, such as pixel coordinates) or a temporal position (for example, expressed in time lapse or frame number), or a combination of the two. In case of image, the tag can be name of the person(s) in the image, location where the image was captured and so on. In conventional method, tags in the image will be lost when user performs any editing operations in the image. To this end, the user can manually input tag information at the desired content as content once edited can become untagged. However, these conventional content editing methods are disadvantageous as the users must manually input tag information to the edited content.
Moreover, the tag location are not updated at the proper field in the edited content whenever the user performs (1) transform editing operations on image such as cropping, resizing, flipping and (2) rotation operations or distortion operations such as warping, or (3) combining of two images such as stitching, blending etc.
Further, there are no effective solutions to update the tags for each editing operations performed on the original content and reapply the updated tag on the edited content for each format supported by destination platform.
Due to above mentioned drawbacks, existing methods fails to update the tags in the content when the content is edited. Hence, there is a need for a method in which the tags are updated at proper place automatically when the content is edited.

SUMMARY

The present invention provides a method and system to update the tags at proper place in the edited multimedia content after the original multimedia content has been edited.
Another aspect of the invention is to provide a method to format the tags based on the format supported by destination platform in cross platform environment.
Accordingly the invention provides a method for reapplying at least one tag in an edited content based on at least one editing operation, wherein the method includes retrieving a first position of the at least one tag in an original content, applying at least one editing operation to the original content which in turn yields an edited content on a display, then calculating a second position of the at least one tag in the edited content, and reapplying at least one tag of the original content in the calculated second position for display.
The method allows a user to acquire the content with tags from a source platform, then the method formats the tags based on the format supported by different destination platforms.
In other words, the invention provides a method for automatically updating at least one tag of multimedia content, the method comprising:

retrieving a first position of said at least one tag in the multimedia content;
applying at least one editing operation to said multimedia content for providing edited multimedia content
calculating a second position of said at least one tag in said edited multimedia content corresponding to the at least one editing operation; and
updating the position of said at least one tag in the edited multimedia content using the calculated second position.

In an embodiment according the invention, the first and second position of the tag is expressed in first and second tag coordinates respectively, the at least one editing operation comprises a transformation of pixel positions, and the second tag coordinates are calculated by applying the transformation to the first tag coordinates.

Further, a method according the invention can update at least one tag after formatting at least one tag in the at least one of: first position, second position based on the formats supported by different platforms.

Accordingly the invention provides an apparatus for automatically updating at least one tag of an original content during an edit mode, the apparatus includes: a processor and a memory coupled to the processor. The memory storing one or more programs comprising instructions which, when executed by the processor cause the apparatus to: apply at least one editing operation to said original content for providing an edited content; calculate a second position of said at least one tag in the edited content according to predetermined criteria; and reapply said at least one tag of said original content at said calculated second position for display.

In other words, the invention provides an apparatus comprising a processor configured to implement a method as described above.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation. Many changes and modifications may be made within the scope of the embodiments herein without departing from the spirit thereof, and the embodiments herein include all such modifications.

BRIEF DESCRIPTION OF FIGURES

This invention is illustrated in the accompanying drawings, throughout which like reference letters indicate corresponding parts in the various figures. The embodiments herein will be better understood from the following description with reference to the drawings, in which:

FIG. 1 illustrates a flow diagram explaining the process of updating tags in edited image according to an exemplary embodiment;
FIG. 2 illustrates an exemplary method of updating tags in the edited image when a flip is performed;
FIG. 2 (A) and FIG. 2 (B) depict the process to calculate second position of the tags when a vertical flip and 90 degree clockwise rotation is performed according to an exemplary embodiment; FIG. 3 illustrates an exemplary method of updating tags in the edited image when a flip and a nonlinear movement are performed;
FIG. 3 (A) depicts the process of calculating the final position of tag when position of tag is distributed to multiple positions according to an exemplary embodiment;
FIG. 4 illustrates the method of updating tags when two images are combined together;
FIG. 4 (A) and FIG. 4 (B) depict the process to calculate the second position of the tag and the position of two images in the resultant image according to an exemplary embodiment;
FIG. 5 illustrates the method of cropping image along with tags;
FIG. 5 (A) depicts the process to calculate the second positions of tags in the cropped image according to exemplary embodiments;
FIG. 6 illustrates the method of blending images, according to an exemplary embodiment;
FIG. 7 illustrates the copy/cut and paste operation of the image;
FIG. 7 (A) depicts the scenario in which the pasted area occupies tag area completely;
FIG. 7 (B) depicts the scenario in which the pasted area occupies the tag area partially according to an exemplary embodiment;
FIG. 8 illustrates the method of updating tags when a plurality of actions is performed on the image according to an exemplary embodiment;
FIG. 9 illustrates an overview of content tag formatting in cross platform environment according to an exemplary embodiment; and
FIG. 10 illustrates a computing environment implementing the method of the present invention according to an exemplary embodiment.

DETAILED DESCRIPTION OF INVENTION

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein can be practiced and to further enable those of skill in the art to practice the embodiments herein. Accordingly, the examples should not be construed as limiting the scope of the embodiments herein.

Throughout the document the term content and multimedia content are used interchangeably.

The embodiments herein achieve a method and system to update and reapply tags at proper place automatically even after the content is edited. The position of a tag can be a spatial position (for example expressed in two or three dimensional coordinates, such as pixel coordinates) or a temporal position (for example, expressed in time lapse or frame number), or a combination of the two. The method retrieves the first position of tags from original content and allows user to perform editing operations on the original content to generate edited content. After applying editing operations, the method herein calculates the second positions of the tags in the edited content as per editing operation applied. In an embodiment, the method calculates the second position of the tags one by one after each editing operation.

In an embodiment, at the end of all editing operations the method calculates the second position of tags by applying each editing operations one by one to tag. In other words, the second position is calculated by evaluating a cascade of transformations corresponding to the cascade of editing operations.

In an embodiment, the method calculates the second position of tags after at least one editing operation.

In an embodiment, the content can comprise of image, video, audio or the like.

In an embodiment, the tag may refer to the tags created by the user such as tags of people, face tags, location, and brands and so on.

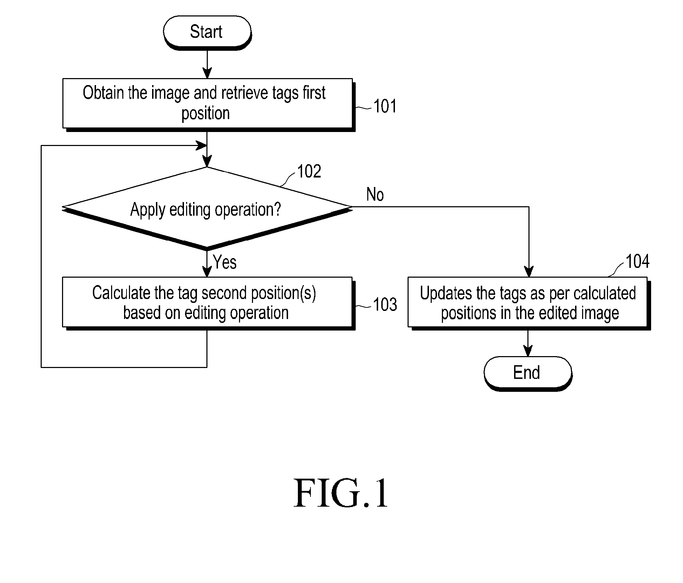

Referring now to the drawings, and more particularly to FIGS. 1 through 10, where similar reference characters denote corresponding features consistently throughout the figures, there are shown preferred embodiments.

FIG. 1 illustrates a flow diagram 100 illustrating the process of updating tags in an edited image according to exemplary embodiments as disclosed herein. As shown, initially the method obtains (101) the original image and retrieves the tags and first position of the tags in the image.

In an embodiment, the original image is obtained from a device such as Mobile phone, Camera, Computer and like, information and data servers (Social Networking Sites, multimedia content hosting sites and like) which provide means to upload/download multimedia content.

After receiving the image, the method checks (102) whether the user wants to apply any editing operation.

If the method finds that the user wants to apply editing operation, then the method applies the editing operation to the multimedia content and calculates (103) second position of the tags in edited image based on editing operation applied.

After calculating the second position(s) of tag, the method loops back to the previous step 102.

In an embodiment, the editing operation can include rotating, cropping, resizing, image stitching, image merging, image warping, image blending, cut copy paste, scribbling or the like.

In an embodiment, the editing operation can include changing at least one pixel value of the image.

In an embodiment, the editing operation can include changing at least one pixel position of the image.

In an embodiment, the editing operation can include acquiring content from source platform with tags as per source platform and upload same content on destination with tags as per format supported by destination platform.

In an embodiment, the editing operation can include acquiring content from source platform with tags as per source platform and editing the content and upload edited content on destination platform with edited tags as per format supported by destination platform.

In an embodiment, the editing operation can include changing at least one frame position in a sequence of image frames such as in video.

In an embodiment, the editing operation can include adding at least one frame at any position in video frame sequence.

In an embodiment, the editing operation can include removing at least one frame from any position in video frame sequence.

If the editing operation is distortion, which comprises of a nonlinear movement of pixels, then pixels of the original image can get distributed in the edited image based on distortion operation. The position of a tag before distortion operation on an image and after the distortion will get distributed to multiple positions. The method calculates second position of the tag from these multiple positions.

In an embodiment, the method calculates the second position of tag by performing mathematical operation in at least one position among these multiple positions. For example, the method uses the mathematical operation as either centroid or mean or median to calculate second position of the tag from at least one position among these multiple positions.

Further, the method updates (104) the first position of the tag in the original image to the second position of the tag of the edited image based on editing operation(s) performed.

The method of updating tags with example editing operations scenario is as follows:

The method first retrieves the first position of tag in the original image. For example, the tag is retrieved from

$$x = 50$$

$$y = 60$$

and assigns tag = "my_friend_tag"

Where x and y are percentages with respect to width and height of the original image.

So, if the width of the image is 400 units and height of the image is 300 units, then 50% of width is 200 units and 60% of height is 180 units, and then position of the tag in terms of absolute co-ordinates would be 200 units in x direction and 180 units in y direction.

If editing operation performed is 90 degree clockwise rotation:

Then, the method rotates the edited image to 90 degree clockwise and second position of the tag will be calculated as follows:

$$X' = 100\text{-}y$$

(where 100 is the percentage)

$$Y' = x$$

and assign Tag = "my_friend_tag"

Considering the above example, the value of X' and Y' will be:

$$X' = 100\text{-}60 = 40$$

$$Y' = 50$$

Finally, the method updates the position of tag X', Y' in edited image.

It should be noted that various actions in flow diagram 100 may be performed in the order presented, in a different order or simultaneously. Further, in some embodiments, some actions listed in FIG. 1 may be omitted.

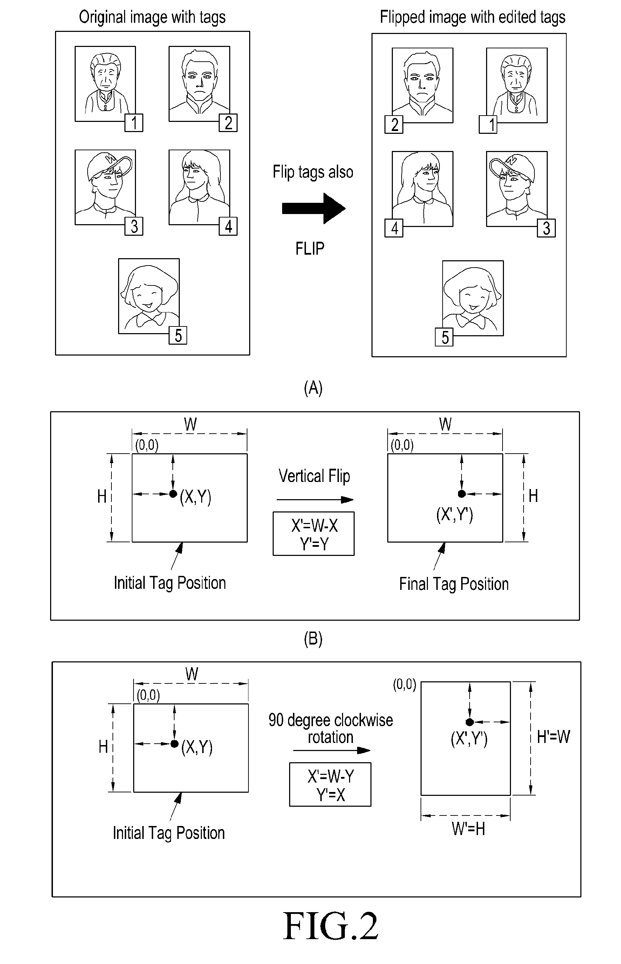

FIG. 2 illustrates an exemplary method of updating tags in the edited image when a flip is performed according to the teachings of the present invention. FIG. 2 (A) and FIG. 2 (B) depict the process of calculating the second position of the tags when a vertical flip and 90 degree clockwise rotation is performed.

More specifically, FIG. 2 depicts the original image with 5 persons face and all the 5 persons are tagged with their name. The 5 persons in the original image are woman tagged with 1, a man tagged with 2, a boy tagged with 3, a girl tagged with 4 and a little girl tagged with 5. When the user performs a flip operation from a state having first position of the tags in the original image, the inventive method calculates the second position of the tags based on flip operation (Horizontal, vertical, diagonal etc.) and updates second position of the tags on flipped image. As shown, after the flip action is performed, the woman tagged 1 is flipped to top-right corner, man tagged with 2 is flipped to top-left corner, boy tagged with 3 flipped to right-center, girl tagged with 4 flipped to left-center and the little girl tagged with 5 also got flipped and tags from first positions in original image are flipped to second positions in flipped image.

The process of calculating second position of the tag is detailed below when either rotation or flip operation is performed.

'W' refers to the width of the image and 'H' refers to the height of the image in FIG. 2 (A). The initial position of tag in the image is (X, Y). The user performs a vertical flip operation, then the second/final position of the tag (X', Y') in the flipped image is calculated as below:

$$X'=W\text{-}X \qquad (1)$$

$$Y'=Y \qquad (2)$$

If editing operation performed is 90 degree clockwise rotation, the new width W' will be equal to the original height H of the image and the new height H' will be equal to the original width W of the image in FIG. 2 (B). Now, the method calculates the second position of the tag (X', Y') in the edited image as follows:

$$X'= H-Y \qquad (3)$$

$$Y'=X \qquad (4)$$

The above mentioned method is an example and is not limited to only vertical flip and 90 degree clockwise rotation. However, the method calculates the second position of the tags when any type of flip operation and rotation to any degree is performed.

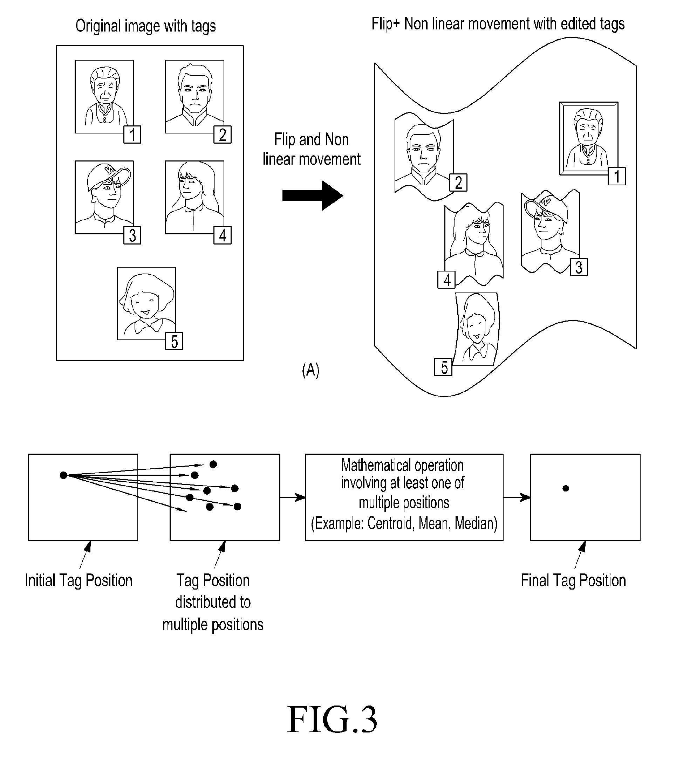

FIG. 3 illustrates an exemplary method of updating tags in the edited image when a flip and a nonlinear movement are performed according the teachings of the present invention. FIG. 3 (A) depicts the process of calculating the final position of the tag when first position of the tag is distributed to multiple positions. FIG. 3 depicts the original image with 5 tagged persons. The user first performs flip operation and then a nonlinear operation on the flipped image.

In an embodiment, the user performs the warping (nonlinear) operation and the flip operation in the original image.

The method calculates the second position of the tag and updates the tag in the flipped image as explained in the FIG. 2. In addition, after the flip operation the user performs the warp operation.

Warping results in nonlinear pixel movements and the method provides the applying of tags at proper places in warped image. The position of the tag before applying warping operation on image and after warping operation can get distributed to multiple positions. Warping generally results in expanding or shrinking the image pixels. In the FIG. 3, wave like warping operation is performed by the user. The pixels in the original image get distributed because of warping operation. As a result of warping, first position of the tags is distributed to a different position in the image. In order to calculate proper second position of the tags in the warped image these multiple positions are used and second positions of the tags are calculated by performing mathematical operation using at least one position among these multiple positions. For example, the method uses the mathematical operation as either centroid or mean or median to calculate second position of the tag from at least one position among the multiple positions.

For example, the method calculates the second position of the tag in the warped image as follows:

$$Xnew = xold* \sin (xold*xold+yold*yold) \qquad (5)$$

$$Ynew = yold *\sin (xold*xold+yold*yold) \qquad (6),$$

where xold and yold are the co-ordinates of first position of the tag in original image. Equations (5) and (6) are exemplary way of calculating second position of the tag. The proposed method can use any other mathematical equation to calculate second position of the tag. Xnew and Ynew are the second position of the tag in the edited image.

FIG. 3 (A) shows the initial position of the tag (dark circle) before performing the nonlinear operation. When user performs the nonlinear operation, then the position of the tag is distributed to multiple positions. Then, the inventive method calculates the second position of the tag by performing mathematical operation with at least one of multiple positions. For example, the method uses either centroid or mean or median to calculate the second position of the tag.

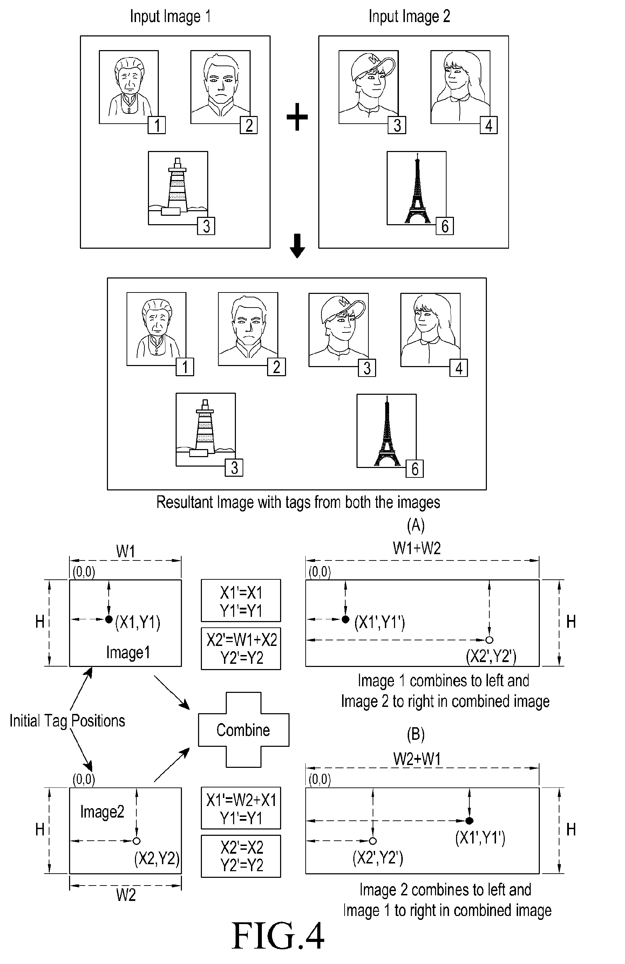

FIG. 4 illustrates the method of updating tags when two images are combined or merged together according to the teachings of the present invention. FIG. 4 (A) and FIG. 4 (B) depict the process of calculating the second position of the tag and the position of two images in the resultant image.

More specifically, FIG. 4 depicts two input images with corresponding tags in each image. When user combines these two images, the tags in the image will also get combined and the inventive method calculates the second position of the tags. Then, the method updates the second position of the tags in the combined image using combined image dimensions and input image dimensions along with first position of the tags in input images.

As shown, the first input image comprises a woman tagged 1, a man tagged 2 and a light house tagged 3. The second input image comprises a boy tagged 4, a girl tagged 5 and a tower tagged 6. When user wants to merge or combine these two input images, then the inventive method combines the images and updates the second position of the tags in combined image based on the first position of the tags in input images and combined image dimensions and input image dimensions.

The process of calculating the second position of the tags when two images are combined together as follows:

Assume that the initial position of tag in image 1 of width 'W1' and height 'H' is (X1, Y1) and initial position of tag in image 2 of width 'W2' and height 'H' is (X2, Y2). When these two images are combined, then the second position of the tag in the image 1 is (X1', Y1') and second position of tag in image 2 is (X2', Y2') respectively. After combining image 1 and image 2 in which image 1 combines to left and image 2 to right in combined image as shown in FIG. 4 (A), position of the tags as a result of combination is calculated as follows:

$$X1'= X1 \qquad (7)$$

$$Y1'=Y1 \qquad (8)$$

and

$$X2'= W1+X2 \qquad (9)$$

$$Y2'=Y2 \qquad (10)$$

width of the combined image becomes W1+W2.

On the other hand, after combining image 1 and image 2 in which image 2 combines to left and image 1 to right in combined image as shown in FIG. 4 (B), position of the tags as a result of combination is calculated as follows:

$$X1'= W2+X1 \qquad (11)$$

$$Y1'=Y1 \qquad (12)$$

and

$$X2'= X2 \qquad (13)$$

$$Y2'=Y2 \qquad (14)$$

width of the combined image becomes W2+W1.

It should be noted that the images to be combined can have different width and heights and may be combined in any direction with overlapping width or height. Based on the ratio between final edited image width, height and input image width, height the method determines the final positions of the tags.

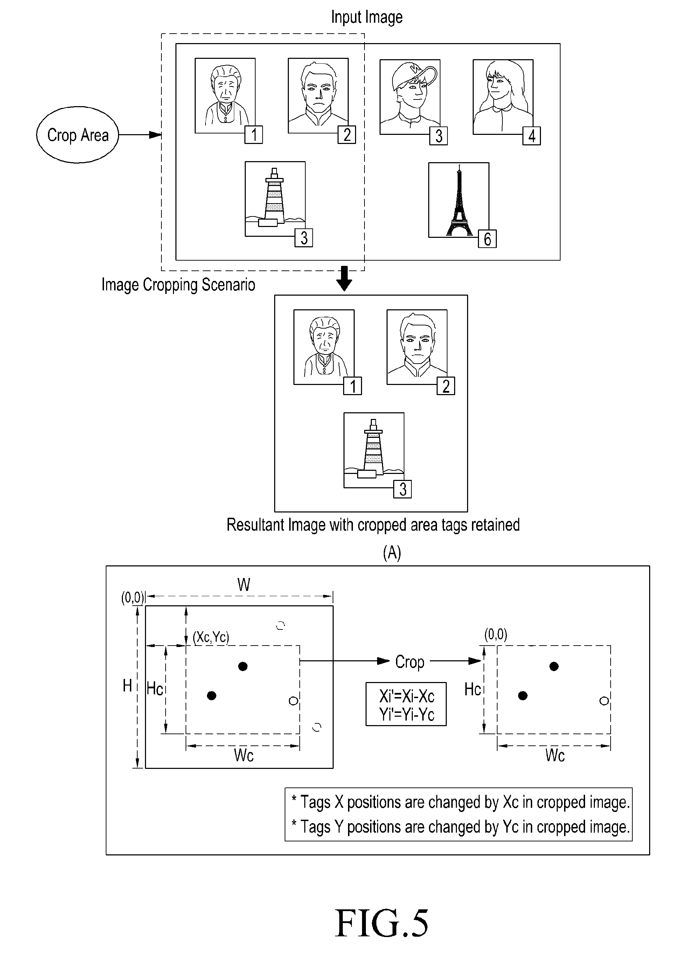

FIG. 5 illustrates the method of cropping image along with tags according to the teachings of the present invention FIG. 5 (A) depicts the process of calculating the second positions of the tags in the cropped image. FIG. 5 depicts the process of cropping an image. The inventive method, after cropping operation, updates the tags to their second position in cropped image and removes tags which were a part of the original image but not a part of the cropped image. The second position of the tags are calculated using original image dimensions and cropped image dimensions along with first positions of the tags. Then, the inventive method updates the second position of the tags to the cropped image, as explained hereinafter.

FIG. 5 comprises 6 images in which a woman is tagged with 1, a man tagged with 2, a monument is tagged 3, a boy is tagged with 4 and a girl is tagged with 5 and a tower is tagged with 6. Now, the user performs a crop operation and left with only 3 images among 6 images. The inventive method calculates the second position of the tags based on the crop operation and updates the tags in the cropped image.

The method calculates the second position of the tags in the cropped image as follows.

Assume the original image has width 'W' and height "H'. The first position of the tags in the original image is represented as (Xi, Yi), where 'i' may be from 0 to n, and n are the total number of tags present. As a result of cropping, the image width and height have changed to Wc and Hc, respectively. The inventive method calculates the second position of the tags (Xi', Yi') in the cropped image and updates the tags in the cropped image as shown in FIG. 5 (A) using the following equations:

$$Xi' = Xi - Xc \qquad (15)$$

$$Yi' = Yi - Yc \qquad (16)$$

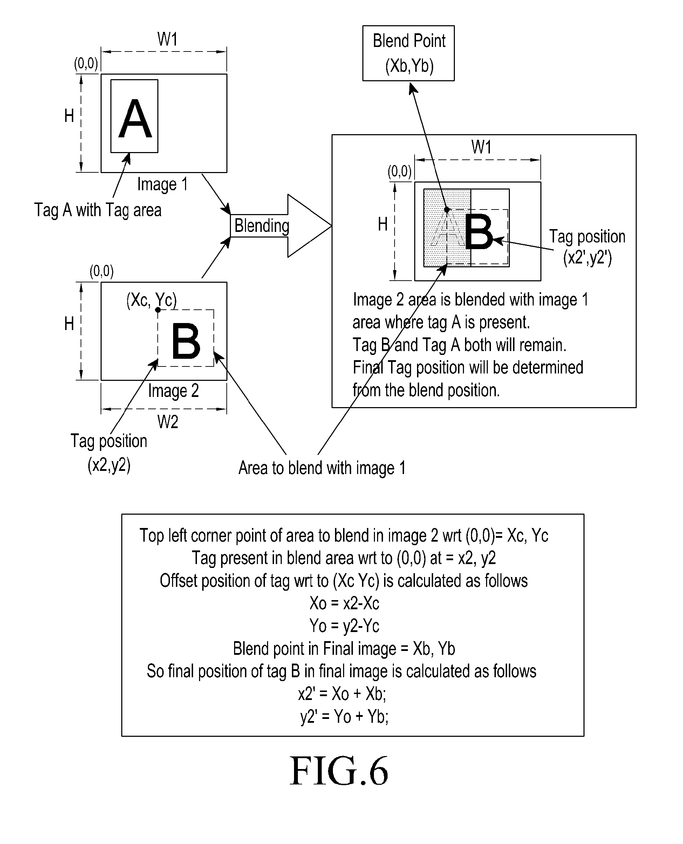

FIG. 6 illustrates the method of blending images according to the teachings of the present invention.

Assume image 1 with width 'W1' and height 'H' has a tag 'A' in the tag area. Let image 2 with 'W2' and height 'H' has tag 'B' to blend with image 1. Blending results in adding additional tag (s) in the blending area and retaining the existing tag (s) in non-blending area and second positions of the tags are determined based on the blending position.

When the position of top-left corner of tag area for the image 2 is Xc=0, Yc=0 and a first position of tag information "B" included in a tag area of the image 2 is x2=0, y2=0 , an offset between the position of the top-left corner (Xc,Yc) of the tag area and the first position (x2, y2) of the tag area (a2-1) can be calculated by the following equations.

$$X_0 = x2 - Xc \qquad (15)$$

$$Y_0 = y2 - Yc \qquad (16)$$

And, when blended position of the tag area including the tag information "B" in an image edited by the blending operation, is Xb, Yb, the second position of the tag information "B" can be calculated by the following equations.

$$x2' = X_{0+} Xb \qquad (17)$$

$$y2 = Y_{0+} Yb \qquad (18)"$$

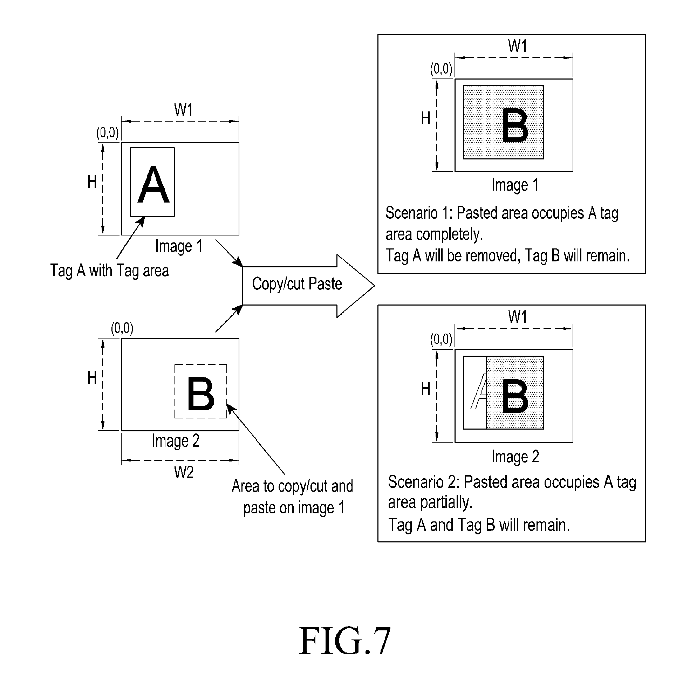

FIG. 7 illustrates the copy/cut and paste operation of the image according to the teachings of the present invention. FIG. 7 (A) depicts the scenario in which the pasted area occupies tag area completely. 7 (B) depicts the scenario in which the pasted area occupies the tag area partially. Assume image 1 with width 'W1' and height 'H' has a tag 'A' in the tag area. Let image 2 with 'W2' and height 'H' have tag 'B' to copy/cut and paste over the image 1. As a result of paste operation, either the tag 'A' will be removed or the pasted area occupies the tag 'A' partially.

After the copy/cut area is pasted over the image 1, and then pasted area occupies tag 'A' area completely as shown in FIG. 7 (A). Thus, tag A will be removed and tag B will remain part of edited image.

Otherwise, pasted area occupies tag 'A' area partially as shown in FIG. 7 (B). Thus, tag A and tag B will remain part of edited image.

The position of the tag 'A' after the pasted operation depends on the paste position in edited image.

In a image edited by the pasted operation, the second position of the tag information "B" can be calculated by the same way as that of the equations 15~18.

If the tag area is scribbled by using brush like functionalities, the tag will still remain when the tag area is partially covered and tag will be removed when tag area is fully covered.

If in image there is one tag then there must be some area associated with that tag. For example face is single tag but the area associated may be a face bound in the rectangle or face itself.

Now in brush related functionalities there is provision to paint on image or scribble over image. If user scribble or paint the tag area fully then that tag is removed otherwise if tag area is scribbled or painted partially that tag would remain.

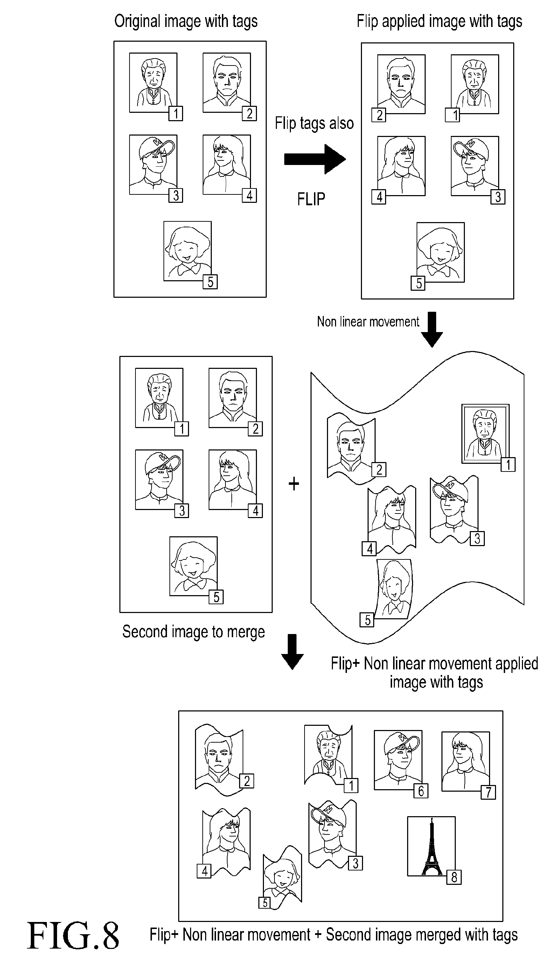

FIG. 8 illustrates the method of updating tags when pluralities of actions are performed on the image according to the teachings of the present invention. More specifically, FIG. 8 depicts multiple editing operations performed by the user and inventive method orienting the tags in proper positions in each stage of editing respectively.

As shown, the original image is initially flipped by the user and the person images with their respective tags are oriented differently according to the flip operation as previously explained with reference to FIG. 2. Then, the user further performs a warp operation on the flipped image. These results further in the movement of first position of the tags to new position as previously explained with reference to FIG. 3. Thereafter, the user wishes to combine one new image with the warped image. The method calculates and updates second position of the tags based on all the editing operations as previously explained with reference to FIGs. 3 and 4. Note that a reverse calculation shown in FIG. 3 can be used to determine the second position of the tags. In an embodiment, the method allows user to perform a recovery operation such as UNDO and REDO operations during the image editing operations. If the user performs UNDO or REDO operation then the position of tag will also get UNDO or REDO (or reversed). That is, the inventive method calculates the second position of tags based on the recovery operation performed by the user.

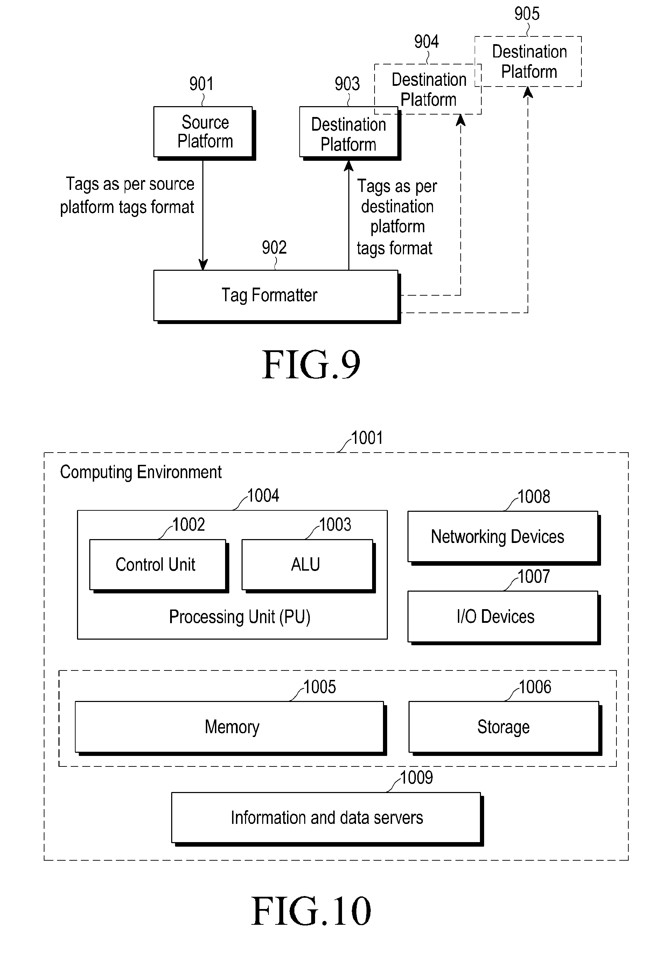

FIG. 9 illustrates an overview of content tag formatting in cross platform environment, according to embodiments as disclosed herein. As depicted in FIG. 9, a user acquires an image with tag information from a source platform 901. Then, the tag formatter 902 formats the tag information that is supported by the destination platform 903. For example, if the acquired image is of dimensions 1000X1000 (width X height) and the tag is positioned at 500X500(X, Y) in the image which is absolute position of tag and X refers to the X-axis position from top left corner and Y refers to the Y-axis position from top left corner. However, the destination platform 903 supports only normalized position of tag [0, 1]. Hence, the method formats the tag in the acquired image based on the format supported by the destination platform 903. Here, the method converts the position of tag to 500(X)/1000(width) =0.5 and 500(Y)/1000(height) = 0.5 to get normalized position of tag. Then, the user uploads the formatted tags along with content to the destination platform 903. Similarly, the method formats the tag based on the formats supported by different destination platforms such as destination platform 904 and destination platform 905.

FIG. 10 illustrates a computing environment implementing the method of the present invention according to the embodiments as disclosed herein. As depicted, the computing environment 1001 includes at least one processing unit 1004 that is equipped with a control unit 1002 and an Arithmetic Logic Unit (ALU) 1003, a memory 1005, a storage unit 1006, a plurality of networking devices 1008, and a plurality Input output (I/O) devices 1007. The processing unit 1004 is responsible for processing the instructions of the algorithm. The processing unit 1004 receives commands from the control unit in order to perform its processing. Further, any logical and arithmetic operations involved in the execution of the instructions are computed with the help of the ALU 1003. The computing environment 1001 also includes information and data servers 1009. The information and data servers 1009 include data associated with each user's account. The method communicates with these information and data servers 1009 in order to retrieve the multimedia content with tags (s) and updates the second position of the tags in the edited multimedia content after the editing operation. The processing unit 1004 communicates with the Information and data servers 1009 for these purposes. In an embodiment, Information and data servers 1009 can be a SNS (Social Networking sites) servers, Multimedia content hosting sites or the like.

The overall computing environment 1001 can be composed of multiple homogeneous and/or heterogeneous cores, multiple CPUs of different kinds, special media and other accelerators. The processing unit 1004 is responsible for processing the instructions of the algorithm. Further, the plurality of processing units 1004 may be located on a single chip or over multiple chips.

The algorithm comprising of instructions and codes required for the implementation are stored in either the memory unit 1005 or the storage 1006 or both. At the time of execution, the instructions may be fetched from the corresponding memory 1005 and/or storage 1006, and executed by the processing unit 1004.

In case of any hardware implementations various networking devices 1008 or external I/O devices 1007 may be connected to the computing environment to support the implementation through the networking unit and the I/O device unit.

The embodiments disclosed herein can be implemented through at least one software program running on at least one hardware device and performing network management functions to control the elements. The elements shown in Fig. 10 include blocks which can be at least one of a hardware device, or a combination of hardware device and software module.

The above-described methods according to the present invention can be implemented in hardware, firmware or as software or computer code that can be stored in a recording medium such as a CD ROM, an RAM, a floppy disk, a hard disk, or a magneto-optical disk or computer code downloaded over a network originally stored on a remote recording medium or a non-transitory machine readable medium and to be stored on a local recording medium, so that the methods described herein can be rendered in such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the scope of the embodiments as described herein.

## Claims

1. A method for automatically updating at least one tag of multimedia content, the method comprising:

   retrieving (101) a first position of said at least one tag in the multimedia content;
   applying (102) at least one editing operation to said multimedia content for providing edited multimedia content
   calculating (103) a second position of said at least one tag in said edited multimedia content corresponding to the at least one editing operation; and
   updating (104) the position of said at least one tag in the edited multimedia content using the calculated second position.

2. The method of claim 1, wherein the first and second position of the tag is expressed in first and second tag coordinates respectively, the at least one editing operation comprises a transformation of pixel positions, and the second tag coordinates are calculated by applying the transformation to the first tag coordinates.

3. The method of claim 1 or 2, wherein the updating further comprises formatting said at least one tag in one of: said first position and said second position based on the formats supported by different platforms.

4. The method of any one of the preceding claims, wherein said multimedia content comprises at least one of: image, audio, and video.

5. The method of any one of the preceding claims, further comprising performing a recovery operation by calculating said second position of said at least one tag after said recovery operation.

6. The method of any one of the preceding claims, wherein said at least one editing operation comprises changing an orientation of said first position of said at least one tag, wherein the second position of said at least one tag in said edited multimedia content is calculated according to an amount of orientation change.

7. The method of any one of the preceding claims, wherein said at least one editing operation results in distribution of a pixel to multiple positions due to distortion, wherein the second position of said at least one tag corresponding to said edited content is calculated according to a mathematical operation of centroid, mean or median of said multiple positions.

8. The method of any one of the preceding claims, wherein said at least one editing operation comprises combining two images into a single image, wherein the second position of said at least one tag in said combined image is calculated according to combined image dimensions of said two images.

9. The method of any one of the preceding claims, further comprising performing at least one of: copy and cut of said at least one tag in a first image and pasting said copy or cut tag in a second image, the second image comprising a second tag, wherein said pasting results in at least one of: removal of the second tag if the pasted area occupies the second tag completely and retaining the second tag if the pasted area occupies the second tag at most partially.

10. The method of any one of the preceding claims, further comprising blending a first image with said at least one tag with a second image with said at least one tag, wherein said blending results in adding said at least one tag in a blending area and retaining said at least one tag in non-blending area based on said blending position.

11. The method of any one of the preceding claims, wherein said at least one editing operation comprises changing at least one pixel value of said content and changing position of said at least one pixel of said content..

12. The method of any one of the preceding claims, wherein the multimedia content comprises a plurality of image frames and said at least one editing operation comprises changing at least one frame position in sequence of image frames, and at least one of: adding or removing said at least one frame at any position in said sequence of image frames.

13. An apparatus for automatically updating at least one tag of multimedia content, the apparatus comprising:

   a processor (1004) configured to implement a method according to any one of the preceding claims 1-12..

14. The apparatus of claim 13, further comprising means (1007, 1008) for retrieving the multimedia content from information and data servers (1009), such as Social Networking Sites or Multimedia content hosting sites.

15. The apparatus of claim 13 or 14, further comprising a display for displaying the edited multimedia content.

Start

Obtain the image and retrieve tags first position ⟋101

Apply editing operation? ⟋102

No

Yes

Calculate the tag second position(s) based on editing operation ⟋103

Updates the tags as per calculated positions in the edited image ⟋104

End

FIG.1

Original image with tags

Flipped image with edited tags

Flip tags also

FLIP

(A)

W

(0,0)

H

(X,Y)

Initial Tag Position

Vertical Flip

X'=W-X
Y'=Y

W

(0,0)

H

(X',Y')

Final Tag Position

(B)

W

(0,0)

H

(X,Y)

Initial Tag Position

90 degree clockwise
rotation

X'=W-Y
Y'=X

(0,0)

(X',Y')

H'=W

W'=H

# FIG.2

Original image with tags

Flip+ Non linear movement with edited tags

Flip and Non
linear movement

(A)

Initial Tag Position

Tag Position
distributed to
multiple positions

Mathematical operation
involving at least one of
multiple positions
(Example: Centroid, Mean, Median)

Final Tag Position

FIG.3

Input Image 1                    Input Image 2

+

Resultant Image with tags from both the images

(A)

$X1'=X1$
$Y1'=Y1$

$X2'=W1+X2$
$Y2'=Y2$

Image1
(X1,Y1)

Initial Tag Positions

Combine

$X1'=W2+X1$
$Y1'=Y1$

$X2'=X2$
$Y2'=Y2$

Image2
(X2,Y2)

(X1',Y1')
(X2',Y2')

Image 1 combines to left and
Image 2 to right in combined image

(B)

(X2',Y2')
(X1',Y1')

Image 2 combines to left and
Image 1 to right in combined image

FIG.4

Input Image

Crop Area →

Image Cropping Scenario

Resultant Image with cropped area tags retained

(A)

$$Xi'=Xi-Xc$$
$$Yi'=Yi-Yc$$

Crop →

* Tags X positions are changed by Xc in cropped image.
* Tags Y positions are changed by Yc in cropped image.

# FIG.5

W1

(0,0)

H

A

Image 1

Tag A with Tag area

Blending

(0,0)

(Xc, Yc)

H

B

Image 2

W2

Tag position
(x2,y2)

Blend Point
(Xb,Yb)

W1

(0,0)

H

B

Tag position
(x2',y2')

Image 2 area is blended with image 1 area where tag A is present.
Tag B and Tag A both will remain.
Final Tag position will be determined from the blend position.

Area to blend with image 1

Top left corner point of area to blend in image 2 wrt (0,0)= Xc, Yc
Tag present in blend area wrt to (0,0) at = x2, y2
Offset position of tag wrt to (Xc Yc) is calculated as follows
$Xo = x2-Xc$
$Yo = y2-Yc$
Blend point in Final image = Xb, Yb
So final position of tag B in final image is calculated as follows
$x2' = Xo + Xb;$
$y2' = Yo + Yb;$

# FIG.6

W1

(0,0)

H

**A**

Image 1

Tag A with Tag area

Copy/cut Paste

(0,0)

H

**B**

Image 2

W2

Area to copy/cut and paste on image 1

W1

(0,0)

H

**B**

Image 1

Scenario 1: Pasted area occupies A tag area completely.
Tag A will be removed, Tag B will remain.

W1

(0,0)

H

**A** **B**

Image 2

Scenario 2: Pasted area occupies A tag area partially.
Tag A and Tag B will remain.

# FIG.7

Original image with tags                Flip applied image with tags

Flip tags also

FLIP

Non linear movement

Second image to merge                +

Flip+ Non linear movement applied
image with tags

FIG.8    Flip+ Non linear movement + Second image merged with tags

901

Source
Platform

904

Destination
Platform

905

Destination
Platform

903

Destination
Platform

Tags as per source
platform tags format

Tags as per
destination
platform
tags format

902

Tag Formatter

# FIG.9

1001

Computing Environment

1004

Processing Unit (PU)

1002

Control Unit

1003

ALU

1008

Networking Devices

1007

I/O Devices

1005

Memory

1006

Storage

1009

Information and data servers

# FIG.10

Europäisches
Patentamt

European
Patent Office

Office européen
des brevets

## EUROPEAN SEARCH REPORT

Application Number

EP 13 16 1869

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 133 925 A (JAREMKO MARK [US] ET AL) 17 October 2000 (2000-10-17) * column 11, line 61 - column 12, line 60 * * column 24, lines 56-66 * | 1-15 | INV. G11B27/031 G06F17/30 H04N1/387 |
| A | US 2008/143742 A1 (JEONG JI-WON [KR] ET AL) 19 June 2008 (2008-06-19) * paragraphs [0107] - [0110] * | 3 | |
| A | WO 2004/036575 A1 (SAMSUNG ELECTRONICS CO LTD [KR]) 29 April 2004 (2004-04-29) * figure 9 * | 3 | |

TECHNICAL FIELDS
SEARCHED      (IPC)

G06F
G11B
H04N

The present search report has been drawn up for all claims

| Place of search | Date of completion of the search | Examiner |
|---|---|---|
| The Hague | 13 November 2013 | Mourik, Piet |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 2 674 946 A1**

## ANNEX TO THE EUROPEAN SEARCH REPORT
## ON EUROPEAN PATENT APPLICATION NO.

EP 13 16 1869

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2013

| Patent document cited in search report | | Publication date | Patent family member(s) | | Publication date |
|---|---|---|---|---|---|
| US 6133925 | A | 17-10-2000 | US | 5621871 A | 15-04-1997 |
| | | | US | 6133925 A | 17-10-2000 |
| US 2008143742 | A1 | 19-06-2008 | KR | 20080056583 A | 23-06-2008 |
| | | | US | 2008143742 A1 | 19-06-2008 |
| WO 2004036575 | A1 | 29-04-2004 | AU | 2003269546 A1 | 04-05-2004 |
| | | | BR | 0315004 A | 09-08-2005 |
| | | | CA | 2498882 A1 | 29-04-2004 |
| | | | EP | 1552516 A1 | 13-07-2005 |
| | | | JP | 4988200 B2 | 01-08-2012 |
| | | | JP | 2006512025 A | 06-04-2006 |
| | | | MX | PA05003945 A | 17-06-2005 |
| | | | RU | 2323486 C2 | 27-04-2008 |
| | | | TW | I221261 B | 21-09-2004 |
| | | | US | 2004141717 A1 | 22-07-2004 |
| | | | US | 2004143789 A1 | 22-07-2004 |
| | | | US | 2004143793 A1 | 22-07-2004 |
| | | | WO | 2004036575 A1 | 29-04-2004 |

EPO FORM P0459

For more details about this annex : see Official Journal of the European Patent Office, No. 12/82

22